# EUROPÄISCHE PATENTSCHRIFT

(11) **EP 3 365 300 B1**
(45) Veröffentlichungstag und Bekanntmachung des Hinweises auf die Patenterteilung: **27.05.2026**
(21) Anmeldenummer: 16784467.9
(22) Anmeldetag: 17.10.2016
(51) Int. Cl.: C04B 28/04, C04B 40/00

(54) **ZUSATZMITTEL FÜR DIE INTERNE NACHBEHANDLUNG VON MINERALISCHEN BINDEMITTELZUSAMMENSETZUNGEN**
ADDITIVE FOR INTERNAL CURING OF MINERAL BINDER COMPOSITIONS
ADDITIF POUR LE DURCISSEMENT INTERNE DE COMPOSITIONS DE LIANTS MINERALES

(30) Priorität: 21.10.2015 EP 15190750
(43) Veröffentlichungstag der Anmeldung: 29.08.2018
(73) Patentinhaber: Sika Technology AG, 6340 Baar (CH)
(72) Erfinder: BÜRGE, Christian, 5503 Schafisheim (CH); MÄDER, Gilbert, 8460 Marthalen (CH); WOMBACHER, Franz, 8916 Jonen (CH)
(74) Vertreter: Sika Patent Attorneys
(86) Internationale Anmeldenummer: PCT/EP2016/074842
(87) Internationale Veröffentlichungsnummer: WO 2017/067872

(56) Entgegenhaltungen:
- EP-A1- 2 821 424
- WO-A1-2015/028547
- WO-A2-2012/162292
- CN-A- 102 108 027
- DE-A1- 19 539 250
- DE-A1- 19 812 246
- JP-A- 2008 266 130
- US-A1- 2010 285 224

## Beschreibung

### Technisches Gebiet

Die Erfindung betrifft ein Zusatzmittel für mineralische Bindemittelzusammensetzungen, insbesondere ein Nachbehandlungsmittel für mineralische Bindemittelzusammensetzungen, und dessen Verwendung. Weiter bezieht sich die Erfindung auf eine mineralische Bindemittelzusammensetzung enthaltend das Zusatzmittel, daraus erhältliche Formkörper sowie ein Verfahren zur Herstellung der mineralischen Bindemittelzusammensetzung.

### Stand der Technik

Für die Qualität und Dauerhaftigkeit von ausgehärteten mineralischen Bindemittelzusammensetzungen, wie z.B. Beton oder Mörtel, ist die Dichte der Bindemittelmatrix ausschlaggebend.

Dauerhafte Produkte auf Basis von ausgehärteten mineralischen Bindemittelzusammensetzungen zeichnen nicht nur durch ihre Druckfestigkeit aus. Noch wichtiger ist die Wasserdichtigkeit, insbesondere in den oberflächennahen Bereichen. Je geringer die Porosität und je dichter die oberflächennahen Bereiche sind, desto höher ist auch der Widerstand gegen äussere Einflüsse, Beanspruchungen und Angriffe.

Dies wird jedoch nur erreicht, wenn spezielle Massnahmen ergriffen werden, um frisch angemachte Bindemittelzusammensetzungen, z.B. Frischbeton, zu schützen gegen: (i) vorzeitiges Austrocknen durch Wind, Sonne, niedrige Luftfeuchtigkeit, (ii) extreme Temperaturen (Kälte, Hitze) und rasche Temperaturwechsel, (iii) Regen, (iv) thermische und physische Erschütterungen, (v) chemische Angriffe und (vi) mechanische Beanspruchungen. Derartige Massnahmen werden auch als "Nachbehandlung" bezeichnet.

Insbesondere das vorzeitige Austrocknen stellt in der Praxis ein ernsthaftes Problem dar, welches unter anderem die Festigkeitsentwicklung der aushärtenden mineralischen Bindemittelzusammensetzung beeinträchtigt. Werden diesbezüglich keine Massnahmen ergriffen, besteht die Gefahr von geringen Festigkeiten in den oberflächennahen Bereichen, Neigungen zum Absanden, grösserer Wasserdurchlässigkeit, verminderter Witterungsbeständigkeit, geringer Widerstandsfähigkeit gegen chemische Angriffe, Entstehung von Frühschwindrissen und eine erhöhte Gefahr späterer Schwindrissbildung.

Um ein vorzeitiges Austrocknen zu vermeiden, werden frisch angemachte Bindemittelzusammensetzungen, wie beispielsweise Frischbeton, daher üblicherweise einer Nachbehandlung unterzogen. Bekannte Nachbehandlungsmethoden beinhalten unter anderem das Aufbringen flüssiger Nachbehandlungsmittel (z.B. Sika^{®} Antisol^{®} E-20), das Belassen in der Schalung, das Abdecken mit Folien, das Aufbringen wasserhaltiger Abdeckungen, das kontinuierliche Besprühen mit Wasser oder die Unterwasserlagerung sowie Kombinationen dieser Verfahren.

Ebenfalls bekannt ist die Verwendung von Zusatzmitteln, welche den mineralischen Bindemitteln beim Anmachen mit Wasser zugegeben werden und einem vorzeitigen Austrocknen entgegen wirken. Dieses Verfahren wird als "interne Nachbehandlung" oder "internes Curing" bezeichnet.

In diesem Zusammenhang beschreibt die WO 2015/028547 A1 (Cemex Research Group AG) beispielsweise Verfahren bei welchem Zementkomponenten, ein Mittel zur internen Nachbehandlung und tensioaktive Substanzen zusammen gemahlen werden. Das Mittel zur internen Nachbehandlung besteht dabei aus Cellulosefasern, welche durch die tensioaktiven Substanzen dispergiert werden. Die gemeinsame Mahlung des Nachbehandlungsmittels mit den Zementkomponenten soll ein stabileres und effizienteres Verhalten bei der Nachbehandlung ergeben.

Bisher bekannte Verfahren und Mittel zur Nachbehandlung von mineralischen Bindemittelzusammensetzungen sind jedoch häufig aufwändig in der Herstellung, kompliziert in der Anwendung oder sie vermögen in Bezug auf die Wirkung nicht vollständig zu überzeugen. Es besteht daher nach wie vor Bedarf nach neuen und vorteilhafteren Verfahren und Mitteln zur Nachbehandlung von mineralischen Bindemittelzusammensetzungen.

### Darstellung der Erfindung

Aufgabe der Erfindung ist es daher, die vorstehend genannten Nachteile zu überwinden. Insbesondere soll ein verbessertes Mittel für die Nachbehandlung von mineralischen Bindemittelzusammensetzungen bereitgestellt werden. Das Mittel soll zur internen Nachbehandlung einsetzbar sein und die Verarbeitbarkeit, das Abbindeverhalten als auch die Festigkeiten der Bindemittelzusammensetzungen möglichst nicht beeinträchtigen. Des Weiteren sollen vorteilhafte Verfahren, Verwendungen und Bindemittelzusammensetzungen bereitgestellt werden, welche eine effiziente interne Nachbehandlung ermöglichen.

Überraschenderweise wurde gefunden, dass die erfindungsgemässe Aufgabe gemäss Anspruch 1 gelöst werden kann.

Wie es sich bei Versuchen gezeigt hat, lassen sich die erfindungsgemässen Zusatzmittel als effiziente und äusserst wirksame Mittel für die interne Nachbehandlung bzw. das interne Curing von mineralischen Bindemittelzusammensetzungen verwenden. Versuche haben gezeigt, dass die Zusatzmittel das Schwindverhalten von mineralischen Bindemittelzusammensetzungen, z.B. Betonzusammensetzungen, positiv beeinflussen und Rissbildungen in signifikanter Weise reduzieren. Letzteres sowohl während der Abbinde- und Erhärtungsperiode als auch im ausgehärteten Zustand. Ein unerwünschtes Austrocknen der mineralischen Bindemittelzusammensetzungen kann effektiv vermieden werden. Zugleich beeinträchtigen die erfindungsgemässen Zusatzmittel die Verarbeitbarkeit, das Abbinden sowie die Festigkeiten von ausgehärteten Bindemittelzusammensetzungen unwesentlich bis gar nicht. Die Zusatzmittel können beispielsweise direkt dem Anmachwasser zugegeben werden. Eine vorgängige Vermahlung mit Zementkomponenten ist daher nicht notwendig, was die Verwendung stark vereinfacht. Weiter hat es sich gezeigt, dass die Zusatzmittel mit anderen und typischen Zusatzmitteln für mineralische Bindemittelzusammensetzungen kompatibel sind.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Aspekt der vorliegenden Erfindung betrifft ein Zusatzmittel für mineralische Bindemittelzusammensetzungen, insbesondere ein internes Nachbehandlungsmittel für mineralische Bindemittelzusammensetzungen, umfassend wenigstens eine wasserabsorbierende Substanz, wobei die wasserabsorbierende Substanz wenigstens einen Stärkeether, insbesondere Hydroxyalkylstärke, im Speziellen Hydroxypropylstärke, umfasst oder daraus besteht, und wenigstens einen Schwindreduzierer.

Ein "mineralisches Bindemittel" ist dabei im Besonderen ein Bindemittel, insbesondere ein anorganisches Bindemittel, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke oder Hüttensand), ein puzzolanisches Bindemittel (z.B. Flugasche, Trass oder Reisschalenasche) und/oder ein nicht hydraulisches Bindemittel (Gips oder Weisskalk) sein. Auch Mischungen der verschiedenen Bindemittel sind möglich.

Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil von ≥ 35 Gew.-%. Insbesondere ist der Zement vom Typ CEM I, CEM II, CEM III, CEM IV, CEM V (gemäss Norm EN 197-1). Im Besonderen handelt es sich um Zement vom Typ CEM I und/oder CEM II.

Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel wenigstens 95 Gew.-% aus hydraulischem Bindemittel, insbesondere aus Zement.

Es kann aber auch vorteilhaft sein, wenn die Bindemittelzusammensetzung zusätzlich oder anstelle eines hydraulischen Bindemittels andere Bindemittel enthält. Dies sind insbesondere latent hydraulische Bindemittel und/oder puzzolanische Bindemittel. Geeignete latent hydraulische und/oder puzzolanische Bindemittel sind z.B. Schlacke, Flugasche und/oder Silicastaub. Ebenso kann die Bindemittelzusammensetzung inerte Stoffe wie z.B. Kalksteinmehl, Quarzmehl und/oder Pigmente enthalten. In einer vorteilhaften Ausführungsform enthält das mineralische Bindemittel 5 - 95 Gew.-%, insbesondere 5 - 65 Gew.-%, im Speziellen 15 - 35 Gew.-%, latent hydraulische und/oder puzzolanische Bindemittel.

Unter einem "zementösen Bindemittel" wird vorliegend insbesondere ein Bindemittel oder eine Bindemittelzusammensetzung mit einem Anteil von wenigstens 5 Gew.-%, insbesondere wenigstens 20 Gew.-%, bevorzugt wenigstens 35 Gew.-%, im Speziellen wenigstens 65 Gew.-%, Zement verstanden.

Die wasserabsorbierende Substanz und der Schwindreduzierer können grundsätzlich unabhängig voneinander, beispielsweise in getrennten Behältnissen, als zwei oder mehrkomponentiges Zusatzmittel vorliegen. Bevorzugt ist jedoch, dass die wasserabsorbierende Substanz und der Schwindreduzierer vermischt, insbesondere in einem gemeinsamen Behältnis, vorliegen. In diesem Fall ist das Zusatzmittel ein einkomponentiges Zusatzmittel.

Die wenigstens eine wasserabsorbierende Substanz und der wenigstens eine Schwindreduzierer sind insbesondere chemisch unterschiedlich.

Offenbarte aber nicht gänzlich beanspruchte wasserabsorbierende Substanzen umfassen wenigstens einen Vertreter aus der Gruppe bestehend aus superabsorbierenden Polymeren, Schichtsilikaten, Stärke und Cellulose. Der Begriff "Stärke" steht vorliegende sowohl für unmodifizierte als auch für modifizierte Stärke. Unmodifizierte Stärke ist ein Polysaccharid mit der Formel (C₆H₁₀O₅)ₙ, das im Wesentlichen aus α-D-Glucose-Einheiten besteht. Der Parameter "n" gibt dabei die durchschnittliche Anzahl Wiederholeinheiten an. Der Ausdruck "modifizierte Stärke" ist dem Fachmann an sich bekannt. Dabei handelt es sich insbesondere um physikalisch, enzymatisch und/oder chemisch modifizierte Stärken.

Superabsorbierende Polymere werden auch als Superabsorber bezeichnet. Bevorzugt handelt es sich dabei um Polyacrylate oder Copolymere aus Acrylsäure und Natriumacrylat.

Offenbart aber nicht beansprucht ist eine Ausgestaltung, in der die wasserabsorbierende Substanz wenigstens ein Schichtsilikat umfasst oder daraus besteht. Dabei handelt es sich insbesondere um ein Schichtsilikat enthaltend Magnesium. Besonders bevorzugt ist das Schichtsilikat ausgewählt aus der Gruppe bestehend aus Vermiculit, Palygorskit und/oder Sepiolith. Im Besonderen handelt es sich dabei um Vermiculit.

Derartige Verbindungen haben in Kombination mit einem Schwindreduzierer als besonders effektive Mittel zur internen Nachbehandlung herausgestellt.

Die wasserabsorbierende Substanz beinhaltet Stärkeether, insbesondere Hydroxyalkylstärke, oder sie besteht daraus. Speziell vorteilhaft ist Hydroxypropylstärke. Der Stärkeether ist insbesondere erhältlich durch chemische Reaktion von unmodifizierter Stärke mit einem Alkylenoxid, insbesondere einem Propylenoxid. Dies ist dem Fachmann an sich bekannt. Entsprechende Stärkeether sind bei verschiedenen Anbietern zudem kommerziell erhältlich. Stärkeether oder Hydroxyalkylstärke, hat sich im vorliegenden Zusammenhang als ganz besonders bevorzugt herausgestellt.

Im Besonderen umfasst die wasserabsorbierende Substanz Vermiculit und Stärkeether, insbesondere Hydroxyalkylstärke oder Hydroxypropylstärke.

Gemäss einer anderen vorteilhaften Ausgestaltung umfasst die wasserabsorbierende Substanz sowohl Stärkeether, insbesondere Hydroxyalkylstärke oder Hydroxypropylstärke, als auch Cellulose.

Die schwindreduzierende Substanz ist mit Vorteil ausgewählt aus Alkoholen, Monoalkoholen Glykolen, Diolen, Alkandiolen, Alkendiolen, Polyolen, Alkanolaminen und/oder Polyalkylenoxiden. Entsprechend sind auch Mischungen dieser Substanzen möglich.

Als besonders geeignet als schwindreduzierende Substanz haben sich Polyole, bevorzugt Diole, herausgestellt. Speziell vorteilhaft sind Polyole oder Diole mit 2 - 15, bevorzugt mit 3 - 10, besonders bevorzugt mit 4 - 6, Kohlenstoffatomen. Dabei handelt es sich mit Vorteil um Alkanpolyole oder Alkandiole. Diese bestehen aus geradlinigen oder verzweigten Kohlenwasserstoffketten, die an unterschiedlichen Stellen genau zwei Hydroxygruppen tragen. Sie enthalten jedoch keine anderen Heteroatome oder Mehrfachbindungen. Besonders vorteilhaft sind dabei jeweils Diole.

Besonders bevorzugte schwindreduzierende Substanzen sind Ethylenglykol, Diethylenglykol, Propylenglykol, Dipropylenglykol, Butyldiglykol, Neopentylglykol und/oder Hexylenglykol. Ganz besonders vorteilhaft sind Hexylenglykol und/oder Neopentylglykol, insbesondere Neopentylglykol.

Folgende Ausführungsformen der Erfindung haben sich als speziell vorteilhaft erwiesen:
a) Die schwindreduzierende Substanz umfasst ein Diol, insbesondere ein Alkandiol, und die wasserabsorbierende Substanz umfasst Stärkeether.
b) Die schwindreduzierende Substanz umfasst Hexylenglykol und/oder Neopentylglykol und die wasserabsorbierende Substanz umfasst Stärkeether.
c) Die schwindreduzierende Substanz umfasst Neopentylglykol und die wasserabsorbierende Substanz umfasst Vermiculit und Stärkeether.
d) Die schwindreduzierende Substanz umfasst Neopentylglykol und die wasserabsorbierende Substanz umfasst Stärkeether.

Ein Gewichtsverhältnis der schwindreduzierenden Substanz zur wasserabsorbierende Substanz beträgt im Allgemeinen mit Vorteil 5:95 - 99:1, bevorzugt 25:75 - 98:2.

Ein Gewichtsverhältnis von Stärkeether, insbesondere Hydroxyalkylstärke, im Speziellen Hydroxypropylstärke zur schwindreduzierenden Substanz liegt bevorzugt im Bereich von 1:99 - 50:50, bevorzugt 3:97 - 25:75, insbesondere 6.5:93.5 - 20:80, im Speziellen 7:93 - 15:85, ganz besonders bevorzugt 7.5:92.5 - 12.5:87.5.

Offenbart aber nicht beansprucht ist der Fall, dass die wasserabsorbierende Substanz ein Schichtsilikat, insbesondere Vermiculit, umfasst oder daraus besteht und ein Gewichtsverhältnis der wasserabsorbierenden Substanz zur schwindreduzierenden Substanz bevorzugt im Bereich von 50:50 - 95:5, bevorzugt 55:45 - 80:20, insbesondere 60:40 - 75:25, im Speziellen 62:38 - 70:30 liegt.

Im Allgemeinen und bezogen auf das Gesamtgewicht des Zusatzmittels, verfügt die schwindreduzierende Substanz insbesondere über einen Anteil von 5 - 99 Gew.-%, bevorzugt 25 - 98 Gew.-%. Die wasserabsorbierende Substanz weist vorteilhafterweise einen Anteil von 1 - 95 Gew.-%, bevorzugt 2 - 75 Gew.-%, auf.

Der Anteil an Stärkeether, insbesondere Hydroxyalkylstärke, im Speziellen Hydroxypropylstärke, bezogen auf das Gesamtgewicht des Zusatzmittels, beträgt vorteilhafterweise 1 - 50 Gew.-%, bevorzugt 3 - 25 Gew.-%, insbesondere 6.5 - 20 Gew.-%, im Speziellen 7 - 15 Gew.-%, ganz besonders bevorzugt 7.5 - 12.5 Gew.-%.

Offenbart aber nicht beansprucht ist der Fall, dass die wasserabsorbierende Substanz ein Schichtsilikat, insbesondere Vermiculit, umfasst oder daraus besteht, und der Anteil der wasserabsorbierenden Substanz bezogen auf das Gesamtgewicht des Zusatzmittels vorteilhafterweise 50 - 95 Gew.-%, bevorzugt 55 - 80 Gew.-%, insbesondere 60 - 75 Gew.-%, im Speziellen 62 - 70 Gew.-%.

Weiter kann die zusätzlich das Zusatzmittel zusätzlich wenigstens ein weiteres Additiv enthalten, wobei das weitere Additiv insbesondere ausgewählt ist aus der Gruppe umfassend Entschäumer, Farbstoffe, Konservierungsmittel, Fliessmittel, Verflüssiger, Beschleuniger, Verzögerer, Luftporenbildner und/oder Korrosionsinhibitoren.

Das Zusatzmittel kann des Weiteren optional ein Lösungsmittel enthalten, z.B. Wasser und/oder einen Alkohol.

Ein weiterer Aspekt der vorliegenden Erfindung betrifft eine mineralische Bindemittelzusammensetzung, insbesondere eine Mörtel- und oder Betonzusammensetzung, enthaltend ein mineralisches Bindemittel sowie ein Zusatzmittel wie es vorstehend beschrieben ist. Das mineralische Bindemittel ist dabei ebenfalls wie vorstehend beschrieben definiert.

Die mineralische Bindemittelzusammensetzung kann dabei eine trockene oder eine mit Wasser angemachte Bindemittelzusammensetzung sein.

Das Zusatzmittel weist bezogen auf das Gewicht des mineralischen Bindemittels vorteilhafterweise einen Anteil von 0.01 - 10 Gew.-%, insbesondere 0.1 - 8 Gew.-%, bevorzugt 0.1 - 5 Gew.-% oder 0.5 - 3 Gew.-%, auf. Bei derartigen Anteilen wird eine optimale Wirkung des Zusatzmittels erzielt.

Mit Vorteil umfasst das Zusatzmittel zudem ein Fliessmittel, insbesondere einen Polycarboxylatether. Falls vorhanden, weist das Fliessmittel bezogen auf das mineralische Bindemittel vorteilhafterweise einen Anteil von 0.01 - 6 Gew.-%, insbesondere 0.1 - 4 Gew.-%, weiter bevorzugt 0.5 - 3 Gew.-%, auf. Aufgrund der Kombination der erfindungsgemässen Zusatzmittels und des Fliessmittels kann die Verarbeitbarkeit der Bindemittelzusammensetzung verbessert werden und zugleich werden höhere Druckfestigkeiten erreicht. Wie sich gezeigt hat, beeinträchtigt das Fliessmittel die Wirkung des Zusatzmittels kaum oder gar nicht.

Mit Vorteil ist das Fliessmittel ein Kammpolymer umfassend ein Polycarboxylatrückgrat mit daran gebundenen Polyetherseitenketten. Die Seitenketten sind dabei insbesondere über Ester-, Ether- und/oder Amidgruppen an das Polycarboxylatrückgrat gebunden.

Entsprechende Polycarboxylatether und Herstellungsverfahren sind beispielsweise offenbart in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in deren Beispielen. In einer Abart davon, wie sie in EP 1 348 729 A1 auf Seite 3 bis Seite 5 sowie in deren Beispielen beschrieben sind, kann das Kammpolymer in festem Aggregatszustand hergestellt werden.

Die Offenbarung dieser genannten Patentschriften wird hiermit insbesondere durch Bezugnahme eingeschlossen.

Derartige Kammpolymere werden auch von Sika Schweiz AG unter der Handelsnamenreihe ViscoCrete^{®} kommerziell vertrieben.

In einer weiteren bevorzugten Ausführungsform enthält die Bindemittelzusammensetzung zusätzlich feste Aggregate, insbesondere Kies, Sand und/oder Gesteinskörnungen. Entsprechende Bindemittelzusammensetzungen können beispielsweise als Mörtelmischungen oder Betonmischungen eingesetzt werden.

Insbesondere enthält die Bindemittelzusammensetzung zusätzlich Wasser, wobei ein Gewichtsverhältnis von Wasser zu mineralischem Bindemittel bevorzugt im Bereich von 0.25 - 0.8, insbesondere 0.3 - 0.6, bevorzugt 0.35 - 0.5, liegt. Derartige Bindemittelzusammensetzungen lassen sich als Mörtelmischungen oder Betonmischungen direkt verarbeiten.

Ein zusätzlicher Aspekt der vorliegenden Erfindung bezieht sich auf einen Formkörper, welcher erhältlich ist durch Aushärten einer wie vorstehend beschriebenen Bindemittelzusammensetzung nach Zugabe von Wasser. Der so hergestellte Formkörper kann dabei nahezu jede beliebige Form aufweisen und beispielsweise Bestandteil eines Bauwerks, wie z.B. eines Gebäudes, eines Mauerwerks oder einer Brücke, sein.

Ein zusätzlicher Aspekt der Erfindung betrifft die Verwendung wenigstens einer wasserabsorbierenden Substanz und wenigstens eines Schwindreduzierers bzw. eines erfindungsgemässen Zusatzmittels zur internen Nachbehandlung einer mineralischen Bindemittelzusammensetzung. Die wenigstens ein wasserabsorbierende Substanz, der wenigstens eine Schwindreduzierer und die mineralische Bindemittelzusammensetzung sind dabei wie vorstehend beschrieben definiert.

Insbesondere lässt sich das erfindungsgemässe Zusatzmittel als Mittel zur internen Nachbehandlung einer mineralischen Bindemittelzusammensetzung einsetzen.

Ebenso eignet sich das erfindungsgemässe Zusatzmittel zur Verminderung des Schwindens einer mineralischen Bindemittelzusammensetzung, insbesondere während der Abbinde- und/oder Erhärtungsperiode.

Auch vorteilhaft ist Verwendung des erfindungsgemässen Zusatzmittels zur Verminderung des Austrocknens einer mineralischen Bindemittelzusammensetzung, insbesondere während der Abbinde- und/oder Erhärtungsperiode.

Weiter eignet sich das erfindungsgemässe Zusatzmittel zur Verminderung der Bildung von Rissen, insbesondere während der Abbinde- und/oder Erhärtungsperiode, bei einer mineralischen Bindemittelzusammensetzung.

Die vorstehend genannte Abbinde- und/oder Erhärtungsperiode umfasst dabei insbesondere die ersten 28 Tage, insbesondere die ersten 7 Tage oder die ersten 2 Tage, nach dem Anmachen der mineralischen Bindemittelzusammensetzung.

Vorteilhaft ist auch die Verwendung des erfindungsgemässen Zusatzmittels zur Verbesserung der chemischen Beständigkeit und/oder der mechanischen Festigkeit einer Oberfläche einer mineralischen Bindemittelzusammensetzung.

Die mineralischen Bindemittelzusammensetzungen sind dabei wie vorstehendbeschrieben definiert.

Aus den nachfolgenden Ausführungsbeispielen erschliessen sich dem Fachmann weitere vorteilhafte Ausführungsformen der Erfindung.

### Kurze Beschreibung der Zeichnung

Die zur Erläuterung der Ausführungsbeispiele verwendeten Figuren zeigen:
- Fig.1:: Links: Eine mit einer Mörtelmischung gefüllte quaderförmige Schalung mit einer mittig und entlang der gesamten Breite verlaufenden L-förmigen Stahlrippe; Rechts: Eine Detailansicht der Stahlrippe;
- Fig. 2:: Eine Seitenansicht eines Risses in der ausgehärteten Mörtelmischung aus Fig. 1 oberhalb der Stahlrippe. Der Pfeil markiert die Position des Risses;
- Fig. 3:: Eine Aufsicht auf den Riss aus Fig. 2. Der Pfeil markiert wiederum die Position des Risses;
- Fig. 4:: Der zeitliche Schwundverlauf von Mörtelmischungen ohne (Rauten) und mit einem Zusatzmittel auf Basis von Vermiculit bzw. Neopentylglykol (Quadrate bzw. Dreiecke).

### Ausführungsbeispiele

### 1. Verwendete Substanzen

Folgende Substanzen wurden für die Ausführungsbeispiele verwendet:

**Tabelle 1**

| **Bezeichnung** | **Substanz** |
|---|---|
| **mS** | Hydroxypropylstärke (Emset KH 6; Emsland Stärke GmbH, Deutschland) |
| **SSV** | Vermiculit |
| **NPG** | Neopentylglykol |
| **V1** | Herkömmliches externes Nachbehandlungsmittel auf Paraffinbasis (Antisol^{®} E-20, Sika Schweiz AG) |
| **V2** | Herkömmliches internes Nachbehandlungsmittel auf Cellulosebasis (Hidratium^{®}, Cemex Research Group AG, Schweiz ) |

Vermiculit **(SSV)** und Neopentylglycol **(NPG)** sind kommerziell bei verschiedenen Anbietern erhältlich und wurden in Reinform (Reinheit > 97%) eingesetzt.

### 2. Bereitstellung der Zusatzmittel

Es wurden die nachstehend in Tabelle 2 aufgeführten erfindungsgemässen Zusatzmittel **Z1** und **Z3** sowie das nicht erfindungsgemäss Zusatzmittel **Z2** hergestellt:

**Tabelle 2**

| **Bezeichnung** | **Wasserabs. Substanz/Anteil** | **Schwindreduzierer/Anteil** |
|---|---|---|
| **Z1** | **mS** / 8.16 Gew.-% | **NPG** / 91.84 Gew.-% |
| **Z2** | **SSV** / 66.7 Gew.-% | **NPG** / 33.3 Gew.-% |
| **Z3** | **mS** / 11.7 Gew.-% | **NPG** / 88.3 Gew.-% |

Bei sämtlichen der nachstehend beschriebenen Mörtelversuche wurde ein modifiziertes Polycarboxylat in Form von Sika^{®} ViscoCrete^{®}-3081 S als Fliessmittel eingesetzt. Sika^{®} ViscoCrete^{®}-3081 S ist ein Kammpolymer mit Polycarboxylatrückgrat und über Estergruppen gebundenen Polyalkylenoxid-Seitenketten. Das Fliessmittel wurde in einer Konzentration von 1.0 Gew.-%, bezogen auf das Bindemittel, eingesetzt und vorgängig dem Anmachwasser zugemischt.

### 3. Mörtelmischungen

Die Wirksamkeit der erfindungsgemässen Zusatzmittel wurde in Mörtelmischungen getestet. Hierfür wurden Mörtel wie in Tabelle 3 spezifiziert verwendet.

**Tabelle 3: Trockenzusammensetzung der verwendeten Mörtelmischungen (Grässtkorn 8 mm)**

| **Komponente** | **Mischung M1** | **Mischung M2** |
|---|---|---|
| CEM I | 750 g | - |
| CEM II A-LL | - | 750 g |
| Kalksteinfüller | 141 g | 141 g |
| Sand 0-1 mm | 738 g | 738 g |
| Sand 1-4 mm | 1107 g | 1107 g |
| Sand 4-8 mm | 1154 g | 1154 g |

Für Mischung **M1** wurde als Zement Schweizer CEM I 42.5 N (= Mischung von Zementen aus Normo 4 [Siggenthal /Holcim AG], Vigier CEM I 42.5N [Vigier Ciment AG] und CEM I 42.5 N [Wildegg /Jura cement] im Gewichtsverhältnis 1:1:1) mit einer Feinheit nach Blaine von 3'600 cm²/g eingesetzt. Die Sande, der Kalksteinfüller und der Zement wurden 1 Minute in einem Hobart-Mischer trocken gemischt. Innerhalb von 30 Sekunden wurde das Anmachwasser, in dem das Fliessmittel (1.0 Gew.-% bezogen auf Zement) und gegebenenfalls das Zusatzmittel **Z1** - **Z3** oder **V2** gelöst oder dispergiert war, zugegeben und noch weitere 2.5 Minuten gemischt. Die Gesamt-Mischzeit nass dauerte jeweils 3 Minuten. Der Wasser/Zement-Wert (w/z-Wert) lag im Bereich von 0.49 - 0.55 (siehe Tabelle 4).

Mischung **M2** wurde in gleicher Weise hergestellt wobei aber als Zement Schweizer CEM II A-LL (Wildegg /Jura cement) verwendet wurde. Der Wasser/Zement-Wert (w/z-Wert) betrug 0.58 (siehe Tabelle 5).

Der Anteil an allenfalls vorhandenem Zusatzmittel bezogen auf Zement lag bei 0.17 Gew.-% für Zusatzmittel **V2,** 0.5 Gew.-% für die Zusatzmittel **Z1** und **Z3** sowie 1.35 Gew.-% für das Zusatzmittel **Z3.** Dies entspricht den optimalen Dosierungen für die jeweiligen Zusatzmittel.

### 4. Testverfahren

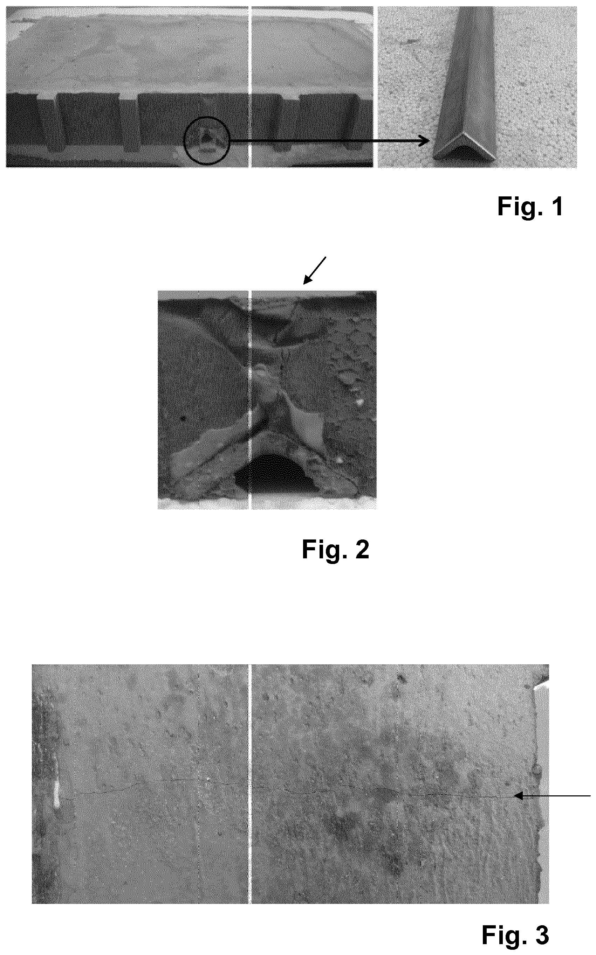

Zur Bestimmung der Wirkung der Zusatzmittel wurde in Laborversuchen eine quaderförmige Schalung (31 cm × 16 cm × 4 cm) mit einer mittig und entlang der gesamten Breite verlaufenden L-förmigen Stahlrippe bereitgestellt (siehe Fig. 1). Die Stahlrippe diente dabei als Sollbruchstelle. Die Schalung wurde sodann mit den frisch angemachten Mörtelmischungen gefüllt und in einer Klimakammer mit Windkanal unter definierten Bedingungen gelagert. Dabei konnte sowohl die Temperatur, die relative Luftfeuchtigkeit und die Windgeschwindigkeit währen der Lagerung kontrolliert werden. Nach zwei Tagen wurden die so hergestellten Proben optisch auf allfällige Rissbildung geprüft (vgl. Fig. 2 und 3).

Das Schwindverhalten wurde in Anlehnung an die Schweizer Norm SIA 262/1 anhand von Prismen (120 mm × 120 mm × 360 mm) bei 20°C und 65 % relativer Luftfeuchtigkeit nach 1, 2, 3 und 7 Tagen geprüft. Die beobachten Längenveränderungen der Prismen bezogen auf die Nullprobe (Wert nach 1 Tag) wurden entsprechend in Promille (‰) erfasst.

Ebenfalls untersucht wurde die Wirkung der Zusatzmittel auf das Abbindeverhalten der Mörtelmischungen durch Messung der zeitlichen Temperaturentwicklung bei einer Umgebungstemperatur von 20°C. Die Temperaturmessung erfolgte mit einem Thermoelement als Temperatursensor in an sich bekannter Weise. Sämtliche Proben wurden unter gleichen Bedingungen gemessen. Als Mass für die Erstarrungszeit wird im vorliegenden Fall die vom Anmachen der Mörtelmischung bis zum Erreichen des nach der Induktionsphase bzw. Ruhephase auftretenden Temperaturmaximums verstrichene Zeit betrachtet.

Zudem wurden die Druckfestigkeiten der Mörtelmischungen zu verschiedenen Zeiten (1, 7 und 28 Tage) nach dem Anmachen der Mörtelmischungen bestimmt. Die Prüfung zur Bestimmung der Druckfestigkeit (in N/mm²) erfolgte an Prismen (40 x 40 x 160mm) gemäss den Normen EN 12390-1 bis 12390-4.

Unmittelbar nach dem Anmachen der Mörtelmischungen sowie 30 Minuten und 60 Minuten danach wurde auch das jeweilige Ausbreitmass (ABM) gemessen. Das Ausbreitmass (ABM) des Mörtels wurde gemäss EN 1015-3 gemessen.

Der Luftgehalt wurde unmittelbar nach dem Anmachen der Mörtelmischung gemäss Norm EN 1015-7 (Luftgehalt) ermittelt.

### 5. Resultate

### 5.1 Rissbildung

Tabelle 4 zeigt die Wirkung der Zusatzmittel in Bezug auf die Vermeidung der Rissbildung unter verschiedenen Bedingungen und Verwendung von Mörtelmischung **M1.** Erwünscht ist, dass nach Möglichkeit keine Risse entstehen. Die Versuche wurden wie vorstehend in Kapitel 4 beschrieben durchgeführt.

Bei den Versuchen **A - C** und **F - G** wurden erfindungsgemässe Zusatzmittel verwendet. Zu Vergleichszwecken wurden zudem die Referenzversuche **R1** - **R8** ohne oder mit nicht erfindungsgemässen Zusatzmitteln durchgeführt. Bei den Versuchen **R4** und **R5** wurde das Zusatzmittel **V1** jeweils nicht der Mörtelmischung zugegeben, sondern wie vom Hersteller vorgesehen nachträglich zur externen Nachbehandlung eingesetzt.

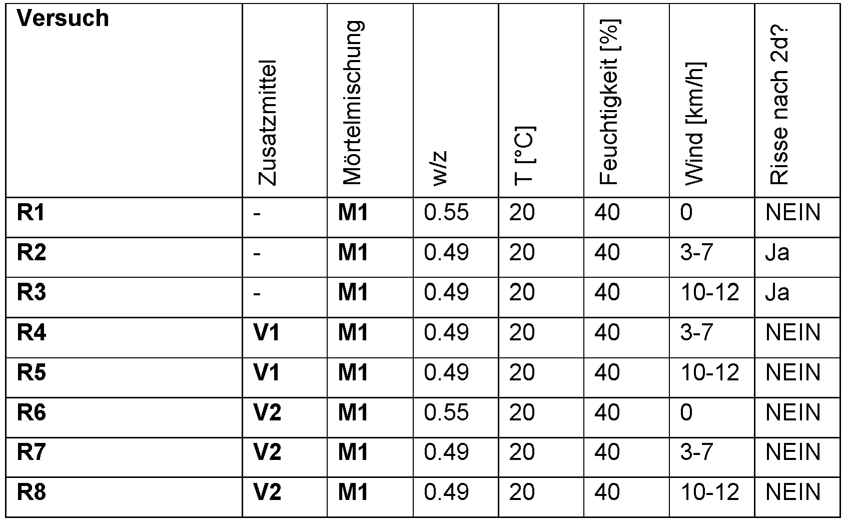

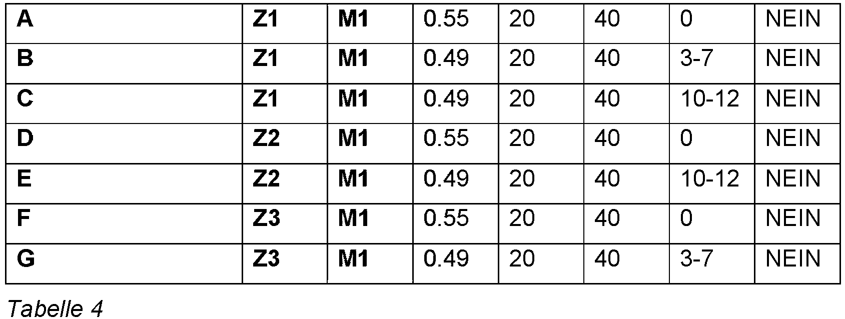

Die Resultate in Tabelle 4 zeigen deutlich, dass die erfindungsgemässen Zusatzmittel **Z1** und **Z3** in Bezug auf die Vermeidung von Rissen mindestens so gut abschneiden, wie bekannte externe Nachbehandlungsmittel **(V1)** oder herkömmliche interne Nachbehandlungsmittel **(V2).**

Tabelle 5 zeigt die Resultate unter Verwendung von Mörtelmischung **M2.** Bei den Versuchen **J** und **K** wurden erfindungsgemässe Zusatzmittel verwendet. Zu Vergleichszwecken wurden wiederum Referenzversuche **(R9 - R14)** ohne oder mit nicht erfindungsgemässen Zusatzmitteln durchgeführt. Bei den Versuchen **R11** und **R12** wurde das Zusatzmittel **V1** jeweils nicht der Mörtelmischung zugegeben, sondern wie vom Hersteller vorgesehen, nachträglich zur externen Nachbehandlung eingesetzt.

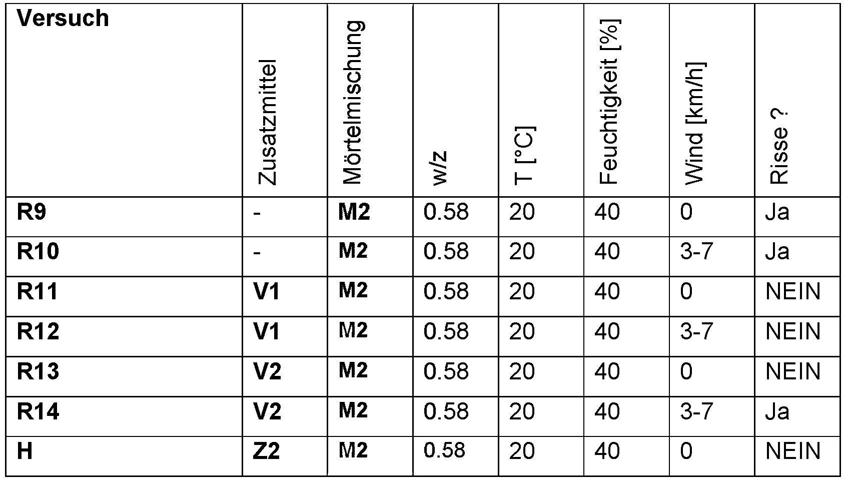

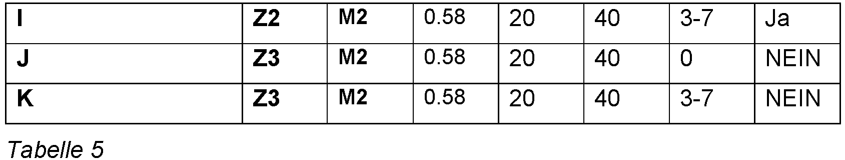

Aus den Daten in Tabelle 5 ergibt sich, dass die erfindungsgemässen Zusatzmittel auch in anderen Zementtypen problemlos funktionieren und gegenüber den bekannten Nachbehandlungsmittel zum Teil sogar besser abschneiden. So verhindert Zusatzmittel **Z3** auch bei Windgeschwindigkeiten von 3 - 7 km/h die Rissbildung effektiv (siehe Versuch **K).** Unter den entsprechenden Bedingungen sind mit dem herkömmlichen Mittel **V2** jedoch bereits Risse vorhanden (siehe Versuch R14).

### 5.2 Schwindverhalten

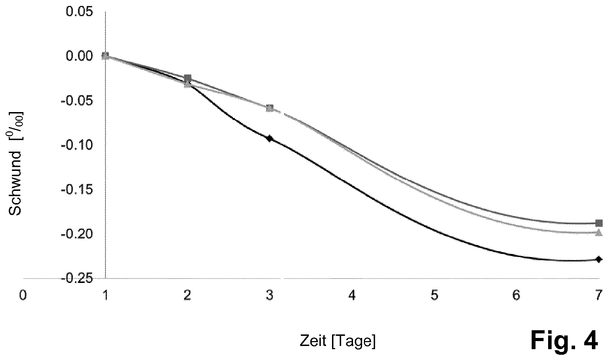

Das Schwindverhalten wurde mit einer Mörtelmischung vom Typ **M2** und unter Verwendung eines Zusatzmittels vom Typ **Z2** (nicht erfindungsgemäss) untersucht. Die Herstellung der Mörtelmischungen erfolgte wie in Kapitel 3 beschrieben. Fig. 4 zeigt die entsprechenden Resultate. Die oberen Kurven mit den Datenpunkten in Form von Quadraten und Dreiecken entsprechend dabei zwei Messserien mit Zusatzmitteln vom Typ **Z2.** Aus Fig. 4 ist ersichtlich, dass im Vergleich mit einer Referenzprobe ohne Zusatzmittel für die Nachbehandlung (Kurve mit den Datenpunkten in Form von Rauten) das Schwindverhalten positiv beeinflusst wird.

### 5.3 Verarbeitbarkeit, Festigkeit und Abbindeverhalten

Um den Einfluss der Zusatzmittel auf die Verarbeitbarkeit, Festigkeit und das Abbindeverhalten zu prüfen, wurde wie in Kapitel 4 dargelegt, das Ausbreitmass (ABM), der Luftgehalt, der Zeitpunkt des Temperaturmaximums t(T_{M}) und die Druckfestigkeit untersucht. Tabelle 6 gibt eine Übersicht über die durchgeführten Versuche und Resultate. Für alle Versuche wurde Mörtelmischung **M1** verwendet.

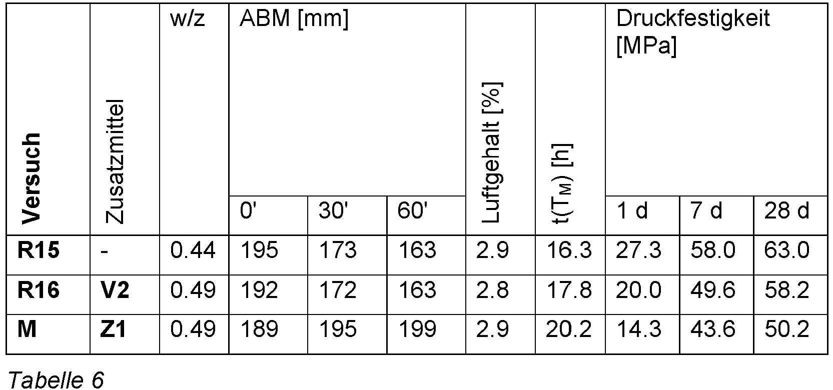

Wie aus den Daten in Tabelle 6 ersichtlich ist, beeinträchtigen die erfindungsgemässen Zusatzmittel die Verarbeitbarkeit, die Festigkeit und das Abbindeverhalten von Mörtelzusammensetzungen kaum bis gar nicht.

Es wurde somit insbesondere gezeigt, dass sich die erfindungsgemässen Zusatzmittel als effiziente und äusserst wirksame Mittel für die interne Nachbehandlung bzw. das interne Curing von mineralischen Bindemittelzusammensetzungen eignen. Im Besonderen wird das Schwindverhalten der mineralischen Bindemittelzusammensetzungen positiv beeinflusst und Rissbildungen können in signifikanter Weise reduziert werden. Ein unerwünschtes Austrocknen von mineralischen Bindemittelzusammensetzungen kann somit effektiv vermieden werden. Zugleich beeinträchtigen die erfindungsgemässen Zusatzmittel die Verarbeitbarkeit, das Abbinden sowie die Festigkeiten der Bindemittelzusammensetzungen unwesentlich bis gar nicht.

Die vorstehend beschriebenen Ausführungsformen sind jedoch lediglich als illustrative Beispiele zu verstehen, welche im Rahmen der Erfindung beliebig abgewandelt werden können.

## Patentansprüche

1. Zusatzmittel für mineralische Bindemittelzusammensetzungen, insbesondere ein internes Nachbehandlungsmittel für mineralische Bindemittelzusammensetzungen, umfassend
(i) wenigstens eine wasserabsorbierende Substanz wobei die wasserabsorbierende Substanz wenigstens einen Stärkeether, insbesondere Hydroxyalkylstärke, im Speziellen Hydroxypropylstärke, umfasst oder daraus besteht, und
(ii) wenigstens einen Schwindreduzierer.

2. Zusatzmittel nach wenigstens einem der vorangehenden Ansprüche, **dadurch gekennzeichnet, dass** die schwindreduzierende Substanz ausgewählt ist aus Alkoholen, Monoalkoholen, Glykolen, Diolen, Alkandiolen, Alkendiolen, Polyolen, Alkanolaminen und/oder Polyalkylenoxiden.

3. Zusatzmittel nach Anspruch 2, **dadurch gekennzeichnet, dass** die schwindreduzierende Substanz ausgewählt ist aus Alkandiolen, insbesondere aus Alkandiolen mit 2 - 15, bevorzugt mit 3 - 10, besonders bevorzugt mit 4 - 6, Kohlenstoffatomen.

4. Zusatzmittel nach Anspruch 3, **dadurch gekennzeichnet, dass** die schwindreduzierende Substanz Hexylenglykol und/oder Neopentylglykol, insbesondere Neopentylglykol, umfasst.

5. Zusatzmittel nach wenigstens einem der vorangehenden Ansprüche, **dadurch gekennzeichnet, dass** die schwindreduzierende Substanz Neopentylglykol und die wasserabsorbierende Substanz Stärkeether umfasst.

6. Zusatzmittel nach wenigstens einem der vorangehenden Ansprüche, **dadurch gekennzeichnet, dass**, ein Gewichtsverhältnis der schwindreduzierenden Substanz zur wasserabsorbierende Substanz 5:95 - 99:1, bevorzugt 25:75 - 98:2, beträgt.

7. Zusatzmittel nach wenigstens einem der vorangehenden Ansprüche, **dadurch gekennzeichnet, dass**, zusätzlich ein weiteres Additiv vorliegt, wobei das weitere Additiv insbesondere ausgewählt ist aus der Gruppe umfassend Entschäumer, Farbstoffe, Konservierungsmittel, Fliessmittel, Verflüssiger, Beschleuniger, Verzögerer, Luftporenbildner und/oder Korrosionsinhibitoren.

8. Mineralische Bindemittelzusammensetzung, insbesondere eine Mörtel- und oder Betonzusammensetzung, enthaltend ein mineralisches Bindemittel sowie ein Zusatzmittel gemäss einem der Ansprüche 1 - 7.

9. Formkörper, erhältlich durch Aushärten einer mit Wasser angemachten mineralischen Bindemittelzusammensetzung nach Anspruch 8.

10. Verfahren zur Herstellung einer mineralischen Bindemittelzusammensetzung, insbesondere einer mineralischen Bindemittelzusammensetzung nach Anspruch 8, wobei ein Zusatzmittel nach wenigstens einem der Ansprüche 1 - 7 mit einem mineralischen Bindemittel vermischt wird.

11. Verwendung von wenigstens einer wasserabsorbierenden Substanz und wenigstens einem Schwindreduzierer oder von einem Zusatzmittels nach einem der Ansprüche 1 - 7 zur internen Nachbehandlung einer mineralischen Bindemittelzusammensetzung.

## Claims

1. Admixture for mineral binder compositions, in particular an internal after-treatment agent for mineral binder compositions, comprising
(i) at least one water-absorbing substance wherein the water-absorbing substance comprises or consists of at least one starch ether, in particular hydroxyalkyl starch, especially hydroxypropyl starch, and
(ii) at least one shrinkage reducer.

2. Admixture according to at least one of the preceding claims, **characterized in that** the shrinkage-reducing substance is selected from among alcohols, monoalcohols, glycols, diols, alkanediols, alkenediols, polyols, alkanolamines and/or polyalkylene oxides.

3. Admixture according to Claim 2, **characterized in that** the shrinkage-reducing substance is selected from among alkanediols, in particular alkanediols having 2-15, preferably 3-10, particularly preferably 4-6, carbon atoms.

4. Admixture according to Claim 3, **characterized in that** the shrinkage-reducing substance comprises hexylene glycol and/or neopentyl glycol, in particular neopentyl glycol.

5. Admixture according to at least one of the preceding claims, **characterized in that** the shrinkage-reducing substance comprises neopentyl glycol and the water-absorbing substance comprises starch ether.

6. Admixture according to at least one of the preceding claims, **characterized in that** a weight ratio of the shrinkage-reducing substance to the water-absorbing substance is 5:95-99:1, preferably 25:75-98:2.

7. Admixture according to at least one of the preceding claims, **characterized in that** a further additive is additionally present, with the further additive being selected, in particular, from the group consisting of antifoams, dyes, preservatives, flow improvers, plasticizers, accelerators, retarders, air pore formers and/or corrosion inhibitors.

8. Mineral binder composition, in particular a mortar and/or concrete composition, containing a mineral binder and an admixture according to any of Claims 1-7.

9. Shaped body obtainable by curing a mineral binder composition according to Claim 8 which has been mixed with water.

10. Process for producing a mineral binder composition, in particular a mineral binder composition according to Claim 8, wherein an admixture according to at least one of Claims 1-7 is mixed with a mineral binder.

11. Use of at least one water-absorbing substance and at least one shrinkage reducer or of an admixture according to any of Claims 1-7 for the internal after-treatment of a mineral binder composition.

## Revendications

1. Additif pour compositions de liant minéral, en particulier agent de post-traitement interne pour compositions de liant minéral, comprenant
(i) au moins une substance absorbant l'eau, la substance absorbant l'eau comprenant au moins un éther d'amidon, en particulier un hydroxyalkylamidon, en particulier un hydroxypropylamidon ou étant constituée par celui-ci, et
(ii) au moins un agent de réduction du retrait.

2. Additif selon au moins l'une des revendications précédentes, **caractérisé en ce que** la substance de réduction du retrait est choisie parmi les alcools, les monoalcools, les glycols, les diols, les alcanediols, les alcènediols, les polyols, les alcanolamines et/ou les poly(oxydes d'alkylène).

3. Additif selon la revendication 2, **caractérisé en ce que** la substance de réduction du retrait est choisie parmi les alcanediols, en particulier parmi les alcanediols comprenant 2 - 15, de préférence 3 - 10, de manière particulièrement préférée 4 - 6 atomes de carbone.

4. Additif selon la revendication 3, **caractérisé en ce que** la substance de réduction du retrait comprend de l'hexylèneglycol et/ou du néopentylglycol, en particulier du néopentylglycol.

5. Additif selon au moins l'une des revendications précédentes, **caractérisé en ce que** la substance de réduction du retrait comprend du néopentylglycol et la substance absorbant l'eau comprend un éther d'amidon.

6. Additif selon au moins l'une des revendications précédentes, **caractérisé en ce qu'**un rapport pondéral de la substance de réduction du retrait à la substance absorbant l'eau vaut 5:95 - 99:1, de préférence 25:75 - 98:2.

7. Additif selon au moins l'une des revendications précédentes, **caractérisé en ce qu'**en outre un autre additif est présent, l'autre additif étant en particulier choisi dans le groupe comprenant les antimousses, les colorants, les conservateurs, les agents d'étalement, les liquéfiants, les accélérateurs, les retardateurs, les agents de formation de pores d'air et/ou les inhibiteurs de corrosion.

8. Composition de liant minéral, en particulier composition de mortier et/ou de béton, contenant un liant minéral ainsi qu'un additif selon l'une des revendications 1 - 7.

9. Corps façonné, pouvant être obtenu par durcissement d'une composition de liant minéral selon la revendication 8 gâchée à l'eau.

10. Procédé de préparation d'une composition de liant minéral, en particulier d'une composition de liant minéral selon la revendication 8, un additif selon au moins l'une des revendications 1 - 7 étant mélangé avec un liant minéral.

11. Utilisation d'au moins une substance absorbant l'eau et d'au moins un agent de réduction du retrait ou d'un additif selon l'une des revendications 1 - 7 pour le post-traitement interne d'une composition de liant minéral.
